(19) Europäisches Patentamt
European Patent Office
Office européen des brevets

(11) **EP 1 453 336 B1**

(12) **FASCICULE DE BREVET EUROPEEN**

(45) Date de publication et mention
de la délivrance du brevet:
**23.05.2007 Bulletin 2007/21**

(51) Int Cl.:
***H04Q 7/34*** *(2006.01)*

(21) Numéro de dépôt: **04290422.7**

(22) Date de dépôt: **17.02.2004**

(54) **Procédé d'évaluation de la qualité de service d'un réseau téléphonie mobile**

Verfahren für eine Dienstqualitätsabschätzung von einem Mobiltelefonnetz

Method for a service quality evaluation of a mobile telephone network

(84) Etats contractants désignés:
**AT BE BG CH CY CZ DE DK EE ES FI FR GB GR HU IE IT LI LU MC NL PT RO SE SI SK TR**

(30) Priorité: **27.02.2003 FR 0302384**

(43) Date de publication de la demande:
**01.09.2004 Bulletin 2004/36**

(73) Titulaire: **FRANCE TELECOM**
**75015 Paris (FR)**

(72) Inventeurs:
• **Fourestie, Benoît**
**75014 Paris (FR)**
• **Renou, Sylvain**
**92300 Levallois-Perret (FR)**
• **Altman, Zwi**
**92320 Chatillon (FR)**

(74) Mandataire: **Joly, Jean-Jacques et al**
**Cabinet Beau de Loménie**
**158, rue de l'Université**
**75340 Paris Cédex 07 (FR)**

(56) Documents cités:
**WO-A-03/003775**

• **COCCOLI,SCHEMMER: "ANALYSIS OF GROUP COMMUNICATION PROTOCOLS TO ASSESSQUALITY OF SERVICE PROPERTIES" IEEE 0-7695-0-927-4, 15 novembre 2000 (2000-11-15), pages 247-256, XP001172830**
• **MENG-JU LIN ET AL: "A linux-based EGPRS real-time test bed software for wireless QoS and differentiated service studies" ICC 2002. 2002 IEEE INTERNATIONAL CONFERENCE ON COMMUNICATIONS. CONFERENCE PROCEEDINGS. NEW YORK, NY, APRIL 28 - MAY 2, 2002, IEEE INTERNATIONAL CONFERENCE ON COMMUNICATIONS, NEW YORK, NY: IEEE, US, vol. 1 OF 5, 28 avril 2002 (2002-04-28), pages 1039-1044, XP010589650 ISBN: 0-7803-7400-2**
• **LITJENS R ET AL: "Performance analysis of adaptive scheduling in integrated services umts networks" IEEE, 9 septembre 2002 (2002-09-09), pages 3-7, XP010611810**
• **ALTMAN Z ET AL: "New challenges in automatic cell planning of umts networks" VTC 2002-FALL. 2002 IEEE 56TH. VEHICULAR TECHNOLOGY CONFERENCE PROCEEDINGS. VANCOUVER, CANADA, SEPT. 24 - 28, 2002, IEEE VEHICULAR TECHNOLGY CONFERENCE, NEW YORK, NY: IEEE, US, vol. 1 OF 4. CONF. 56, 24 septembre 2002 (2002-09-24), pages 951-954, XP010608954 ISBN: 0-7803-7467-3**

**Description**

L'invention concerne la prédiction et l'évaluation de la qualité de service des réseaux radio et de téléphonie mobile, et en particulier la prédiction de la qualité de service radio des réseaux de troisième génération (UMTS) pour les services temps réel.

Ces prédictions et évaluations permettent à un opérateur souhaitant déployer un réseau UMTS d'estimer la qualité de service (QoS) offerte pour les services « temps réel », pour une configuration donnée sur une zone d'un réseau. Par service « temps réel » on désigne les services présentant des débits garantis.

L'amélioration de la qualité des réseaux mobiles, ou leur évaluation a donné lieu à une littérature abondante (voir [1, 2, 3] par exemple) aussi bien pour les réseaux de 2ème génération que pour les réseaux de 3ème génération.

Des outils de modélisation ou de mesure ont été développés dans le but de prédire des paramètres nécessaires à l'évaluation des réseaux. Les grandeurs élémentaires comme les puissances émises ou reçues, par les terminaux ou les stations, par exemple, sont calculées ou mesurées.

Toutefois, si ces grandeurs élémentaires sont intéressantes et même nécessaires à l'évaluation de la qualité radio des réseaux, elles ne sont pas toujours suffisantes pour prédire la qualité d'un réseau.

En effet, il est clairement établi aujourd'hui que la qualité d'un réseau s'évalue à partir de certains estimateurs de qualité, critères plus complexes et plus significatifs. Ces estimateurs de qualité sont typiquement :

- la probabilité de non-couverture (outage) dans le réseau ;
- la probabilité d'accès au réseau ;
- la probabilité de maintien de la communication pendant une durée donnée ;
- la probabilité de bonne qualité d'une communication pendant une durée donnée.

Les estimateurs listés ci-dessus sont typiquement recommandés par l'Autorité de Régulation des Télécommunications (ART) en France, par exemple, et correspondent à la qualité de service subjective perçue par un utilisateur. Ces estimateurs définissent la qualité du réseau et des tests comparatifs entre plusieurs réseaux sont menés sur la base ces estimateurs.

Actuellement, l'estimation de la qualité d'un réseau d'accès radio UMTS peut être réalisée de deux manières.

La première manière consiste à simuler un réseau, à calculer des grandeurs élémentaires comme les puissances émises et reçues, et à analyser ces grandeurs élémentaires [1, 2] de manière à évaluer directement la qualité du réseau.

La qualité du réseau étudié est estimée de manière empirique, sur la base de méthodes reposant sur l'expérience. On dira par exemple que la qualité est mauvaise dans une zone où le champ reçu est faible, mais on ne pourra garantir une bonne qualité pour un champ reçu fort.

L'inconvénient de cette technique est qu'elle reste rudimentaire donc souvent peu représentative du comportement réel du réseau, qui repose en pratique sur des phénomènes plus complexes.

Par exemple, l'évaluation délivrée par cette technique repose sur des grandeurs qui s'avèrent aléatoires. La prise en compte empirique de ces grandeurs aléatoires entraîne donc des erreurs.

Cette estimation empirique nécessite en outre la prise en compte d'un grand nombre de grandeurs élémentaires.

Elle est fastidieuse à réaliser.

La seconde technique est expérimentale et consiste à mesurer des estimateurs de qualité sur site.

C'est la méthode utilisée par l'ART en France.

Il est décrit dans une demande de brevet WO02096183, un système d'évaluation comprenant des estimateurs de qualité de service d'un réseau de télécommunications, mesurant de grandeurs élémentaires représentatives du fonctionnement du réseau et produisant un critère représentatif de la perception d'une certaine qualité de service par un utilisateur, sous la forme d'une expression incorporant les grandeurs élémentaires.

Cependant, les estimateurs de qualité ne sont pas toujours mesurables directement ou présentent une variance importante sur site. Il est nécessaire pour les estimer de réaliser un grand nombre de mesures pour atteindre une précision acceptable.

Par exemple, la probabilité de maintien d'une communication sur un temps donné et en un point donné, fonction du trafic, du shadowing (effet de masque généré par des obstacles), etc.

L'intervention de la notion de durée et de maintien est difficile à traduire sur les observables et la mesure directe des estimateurs de qualité est longue, coûteuse et, au final, encore peu fiable.

C'est pourquoi, lors des campagnes de mesure de test, on préfère parfois encore mesurer des grandeurs élémentaires et se ramener à la première technique.

Le but est ici de proposer une technique d'évaluation précise des différents estimateurs de qualité d'un réseau, par exemple de troisième génération, pour les services temps réel.

Cette technique permet d'évaluer simplement des estimateurs de qualité à partir de grandeurs élémentaires mesurées ou simulées en permettant de prendre en compte des évanouissements lents aléatoires du champ (shadowing).

Cette méthode utilise donc en entrée des résultats de mesure ou de simulation et permet d'obtenir en sortie une mesure de la qualité du réseau, telle qu'elle serait perçue par un utilisateur.

Grâce à la prise en compte analytique des évanouissements lents aléatoires tels que le shadowing (effet de masque dû aux obstacles), cette méthode augmente encore la précision et la rapidité par rapport aux méthodes antérieures.

Une conséquence de cette méthode est en outre de pouvoir déterminer le paramètre élémentaire limitant la qualité afin de le modifier pour augmenter la qualité globale.

Ce but est atteint selon l'invention grâce à un procédé d'évaluation de la qualité de service d'un réseau de télécommunications, notamment de téléphonie mobile, comprenant une première étape consistant à mesurer ou simuler une série de grandeurs élémentaires représentatives du fonctionnement du réseau et influant sur la qualité de service, et une deuxième étape consistant à réaliser une analyse de ces grandeurs afin de délivrer une évaluation de la qualité de service dans le réseau, caractérisé en ce que la deuxième étape inclut les sous-étapes suivantes :

a) fournir un critère représentatif de la perception d'une certaine qualité de service par un utilisateur, sous la forme d'une expression composite incorporant un sous-groupe ($\Gamma$) des grandeurs élémentaires, et incorporant également au moins un paramètre aléatoire de fonctionnement du réseau,
b) introduire les grandeurs élémentaires mesurées ou simulées appartenant au sous-groupe ($\Gamma$) dans cette expression composite ;
c) fournir une répartition statistique du paramètre aléatoire, l'introduire dans l'expression composite et en déduire une répartition statistique du critère représentatif de la qualité de service.

D'autres caractéristiques, buts et avantages de l'invention apparaîtront à la lecture de la description détaillée faite en référence aux figures annexées sur lesquelles :

- La figure 1 représente une répartition statistique d'un paramètre de shadowing au niveau mobile, sur laquelle est rapportée une borne minimale pour différents critères élémentaires ;
- La figure 2 représente cette même répartition, sur laquelle est rapportée une borne maximale pour différentes stations ;
- La figure 3 est un schéma simplifié illustrant une simulation de réseau.

Comme nous l'avons vu plus haut, il est possible d'obtenir, par la mesure et/ou la simulation, les valeurs de critères élémentaires dans un réseau UMTS. En un point du réseau, ces critères peuvent être les suivants (mais ne sont pas limitatifs) :

- le critère de couverture UpLink (c'est-à-dire d'un mobile vers une station) (critère 1);
- le critère de couverture DownLink (c'est-à-dire d'une station vers un mobile) (critère 2) ;
- le critère de réception d'au moins un pilote (critère 3) ;
- le critère de qualité de communication minimale (BLER minimal) (critère 4) ;
- le critère de contrôle de charge pour les services temps réel dans le réseau (critère 5) ;
- le critère de contrôle d'admission pour les services temps réel dans le réseau (critère 6) ;
- le critère de couverture UpLink dégradé (critère 7) ;
- le critère de couverture DownLink dégradé (critère 8) ;
- le critère de réception dégradée d'au moins un pilote (critère 9) ;
- le critère sur le nombre de channel elements disponibles à la Node B (critère 10) ;
- le critère sur le nombre de codes disponibles à la Node B. (critère 11);

La méthode consiste à combiner ces critères de façon à former les critères composites de qualité du réseau tel qu'elle serait perçue par un utilisateur. Ces critères peuvent être les suivants (mais ne sont pas limitatifs) :

- le critère de non-couverture (routage) ;
- le critère d'accès au réseau ;
- le critère de maintien de la communication pendant une courte durée donnée ;
- le critère de bonne qualité d'une communication pendant une durée donnée.

En particulier, la méthode décrit la prise en compte de la notion de durée (pour le maintien de la communication et la bonne communication).

Pour chaque point du réseau les paramètres composites sont calculés en prenant en compte analytiquement les évanouissements lents du champ. La variance des paramètres composites est donc réduite, et la précision de calcul amélioré par rapport aux méthodes antérieures.

Une conséquence de cette méthode est de fournir le critère limitant (composite ou non) de la qualité globale du réseau. Cette identification permet de modifier le paramétrage du réseau pour améliorer la qualité offerte.

Cette méthode est basée sur un traitement statistique des données, et des évanouissements lents du champ, que nous détaillons ici.

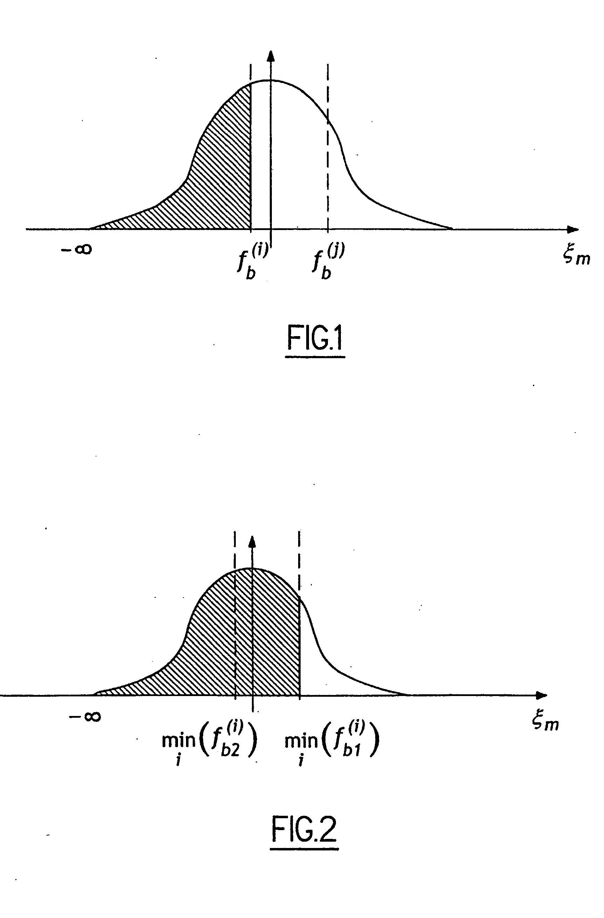

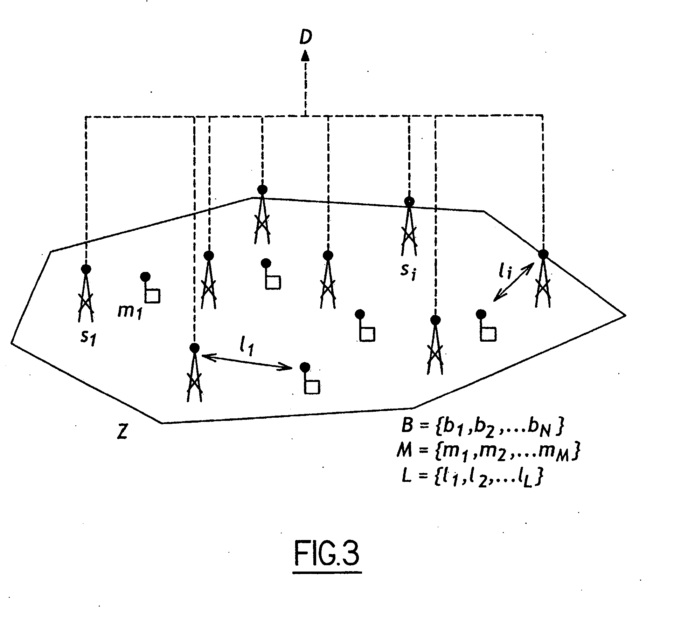

Soit $R$ un réseau d'accès mobile situé sur une zone $Z$ (figure 3). Par « réseau d'accès mobile » nous désignons un ensemble $B$ de stations de base, fixes et de paramètres connus, et un ensemble $M$ de mobiles, ces deux ensembles situés sur Z. R est décrit par un ensemble de paramètres, et nous considérons l'ensemble $L$ des liaisons montantes ou descendantes entre B et M (figure 1).

$L$ peut être observé grâce à des simulations ou à des mesures et dépend du paramétrage connu de $R$. Nous désignerons par $D$ l'ensemble des données décrivant $L$ et le paramétrage de $R$. Les données de $D$ peuvent être géo-localisées et sont de types différents : par exemple le champ généré par $b_i \in B$ en un point de Z, la puissance émise par un mobile $m_j \in M$ pour atteindre une station $b_i \in B$, etc ...

Pour les 11 critères définis précédemment, nous définissons un ensemble $\Gamma$ de critères, portant sur D, en un point $P$ de Z :

- le critère de couverture UpLink, c'est-à-dire d'un mobile vers une station (critère 1) s'exprime comme $P_m^{UL} \langle P_{max}^{UL}$, où $P_{max}^{UL}$ est la puissance maximale du mobile, et $P_m^{UL}$ est la puissance nécessaire au mobile pour atteindre son CIR (rapport de signal à bruit) cible à la station ;

- le critère de couverture DownLink, c'est-à-dire d'une station vers un mobile (critère 2), s'exprime comme $P_m^{DL} \langle P_{max}^{TCH}$, où $P_{max}^{TCH}$ est la puissance maximale autorisée pour un lien DL, et $P_m^{DL}$ est la puissance nécessaire à la station pour atteindre le CIR cible au mobile ;

- le critère de couverture en pilote (critère 3) s'exprime de la façon suivante : il existe au moins une station $b$ telle que $E_c\big)_b / I_o$ > Seuil _ Absolu, où $(E_c)_b$ est la puissance du pilote de b reçue et $I_o$ est l'interférence totale reçue ;

- le critère de BLER, ou Block Error Rate (critère 4) doit être inférieur à un BLER maximal, pour maintenir la communication, et inférieur à un BLER cible pour assurer une bonne communication ;

- le critère composite de charge (critère 5) est utilisé pour le maintien et la bonne communication des mobiles présents dans le réseau. Des exemples de critères de contrôle de charge peuvent être trouvés dans [4] ;

- le critère composite de contrôle d'admission (critère 6). Ce critère est utilisé lors de l'accès dans le réseau de nouveaux mobiles. Des exemples de critères de contrôle d'admission peuvent être trouvés dans [4] ;

- le critère de maintien en UpLink (critère 7), $P_{m\_d}^{UL} \langle P_{max}^{UL}$ où $P_{m\_d}^{UL}$ est la puissance nécessaire au mobile pour atteindre un CIR dégradé à la station. On a bien sûr CIR_dégradé_UL<CIR_Cible_UL ;

- le critère de maintien en DownLink (critère 8), $P_{m\_d}^{DL} \langle P_{max}^{TCH}$ où $P_{m\_d}^{DL}$ est la puissance nécessaire au mobile pour atteindre un CIR dégradé au mobile. On a bien sûr CIR_dégradé_DL<CIR_Cible_DL ;

- le critère de réception maintenue d'au moins un pilote (critère 9),
  $E_c/I_o$ > Seuil _ Absolu _ Dégradé, avec
  Seuil _ Absolu _ Dégradé < Seuil _ Absolu ;

- le critère du nombre de channel elements disponibles à la Node B (critère 10), i.e. le nombre de channel elements libres doit être suffisant pour écouler la débit du service ;

- le critère de code disponible (critère 11), i.e. la station doit pouvoir fournir au mobile un code non-utilisé et orthogonal aux codes déjà utilisés.

Les critères de cet ensemble sont composés pour former des sous-ensembles (ou critères composites) $\Gamma_i$, de $\Gamma$.

On cherche à déterminer les probabilités de non-couverture (outage), d'accès, de maintien et de bonne communication d'un mobile $m$ en un point $P$ de Z. Cette probabilité est fonction de la distribution du trafic et des évanouissements du champ.

Afin de rendre compte de la variabilité du trafic, et du shadowing, $N$ tirages de Monte Carlo sont réalisés et les paramètres utiles du réseau sont calculés (interférences, puissances émises et reçues) pour former l'ensemble D. les mobiles des différents services sont positionnés dans le réseau selon la distribution de trafic de chacun des services.

La variable aléatoire de shadowing est prise en compte de la façon suivante : sur un lien entre une station b et le point P le shadowing est partagé en deux, la première partie, $\xi_b$, est affectée au niveau de la station b, tandis que le reste, $\xi_b$, est affectée au niveau du mobile m.

Pour ces $N$ tirages la valeur de $\xi_m$ est tirée, selon une loi gaussienne centrée et d'écart-type connu. La variable $\xi_m$ qui suit une loi gaussienne d'écart-type connu est prise en compte de manière analytique comme suit. Les écart-types de $\xi_b$ et $\xi_m$ peuvent être obtenus à partir des donnée des modèles de propagation, ou des valeurs usuelles sont utilisées tirées de [5] par exemple.

Pour ces N tirages on s'intéresse à la probabilité d'accès en P par exemple. Une condition élémentaire du critère composite d'accès est que le mobile atteigne son CIR (rapport de signal à bruit) cible au niveau d'une station, c'est-à-dire que le CIR atteint pour la puissance maximale du mobile soit supérieur au CIR cible (critère n°1) :

$$CIR_b^{UL\,max}(\xi_m) \geq CIR_{t\,arg\,et}^{UL} \quad (1)$$

Le $CIR_b^{UL,max}$ atteint s'exprime comme une fonction $f_b^{(1)}$ connue (voir [6] par exemple) de la puissance maximale du mobile $P_b^{UL\,max}$, de l'affaiblissement $Aff_{b,m}$, du shadowing $\xi_b$ en b, du shadowing $\xi_m$ en m, de l'interférence $I_b$ reçue en b, du bruit thermique $N_o$, etc. La condition (1) peut donc s'écrire de la façon suivante

$$\xi_m \leq f_b^{(1)}\left(P_b^{UL\,max}, Aff_{b,m}, \xi_b, I_b, N_0\right) \quad (2)$$

Pour assurer l'accès, en plus du critère n°1, les critères n°2 à 6 doivent être vérifiés. Ces critères s'expriment comme des fonctions connues [6], $f_b^{(k)}$ pour k = 2, ..., 6.

On combine alors ces 6 critères pour trouver le plus contraignant :

$$\xi_m \leq \min\left(f_b^{(1)}, ..., f_b^{(6)}\right) \quad (3)$$

Jusqu'à présent nous avons supposé que le mobile *m* était en liaison avec la station *b*. Or, d'après la norme, le mobile peut être en liaison avec toute station dont il reçoit le pilote (critère n°3). On cherche alors la station, vérifiant les critères n°10 et 11, pour laquelle le critère n°3 est le moins contraignant soit

$$\xi_m \leq \max_{b \in \beta}\left(\min\left(f_b^{(1)}, ..., f_b^{(6)}\right)\right) \quad (4)$$

où β désigne le sous-ensemble des stations vérifiant les critères n°3, 10 et 11.

A titre de remarque, on notera que selon l'algorithme d'accès mis en place, les stations de l'ensemble β doivent aussi vérifier un critère relatif sur le $E_c/I_o$ reçu du CPICH. Dans ce cas, pour qu'une station b' appartienne à β, elle doit vérifier la condition suivante :

$$\left|E_c/I_o)_{b'} - E_c/I_o)_b\right| < Seuil\_Relatif$$

Où *b* désigne la station de meilleur CPICH reçu en P.

Finalement, en utilisant (4), en moyennant sur les différents tirages, et en intégrant analytiquement selon la variable de shadowing $\xi_m$, la probabilité d'accès pour le mobile m s'exprime

$$\hat{P}_{access} = \frac{1}{n} \sum_{i=1}^{n} \left( F_{N(0,1)} \left( \max_{b \in \beta} \left( \min_{k \in [1;6]} f_b^{(k)} \right) \middle/ \sigma \right) \right) \quad (5)$$

Nous avons montré la méthode générale de calcul d'un paramètre composite (probabilité d'accès) en fonction de critères élémentaires n°1 à 6, 10 et 11.

Le calcul de la probabilité d'outage correspond à la combinaison des critères n°1 à 5, et 10 et 11. La combinaison est identique à la combinaison décrite ci-dessous.

Pour le calcul des probabilités de maintien et de bonne communication, la durée intervient. Généralement, cette durée est fixée à 2 mn (selon le protocole de mesure de l'ART).

Pour le calcul de la probabilité de maintien, les critères n°5, 7, 8, 9, 10 et 11 sont combinés comme ci-dessus, et ceci pour les tirages des valeurs de L correspondant à une durée de 2 mn. On dispose ainsi d'une série de réalisations, sur laquelle la méthode est appliquée. Le calcul de la probabilité de bonne communication est réalisé de manière identique mais utilise les critères n°1, 2, 3, 4, 10 et 11 appliqués à la série temporelle de données de *D*.

L'invention décrite selon cette variante consiste en une méthode de calcul de sous-espaces de l'espace des probabilités correspondant aux critères composites de qualité comme la « probabilité de non-couverture » (outage probability), « l'accès au réseau », « le maintien d'une communication de qualité dégradée », ou « le maintien d'une communication de bonne qualité ». Ces critères composites sont déterminés à l'aide de 11 critères élémentaires ou composites qui sont donnés précédemment.

Enfin, ces calculs de bonne qualité peuvent être effectués en tout point de Z, et en particulier sur une grille aussi fine que souhaitée. On peut alors intégrer les résultats sur des sous-zones $Z_i$ de Z. Les sous-zones peuvent correspondre à des zones géographiques, ou à des zones d'exploitation (zones gérées par un équipement unique comme un RNC par exemple).

Cette méthode peut s'appliquer sur tout critère élémentaire ou composite connu à ce jour, ou inconnu. Les onze critères cités ne sont donc pas exhaustifs.

Pour mettre en oeuvre cette méthode de calcul des probabilités de respecter des critères composites, on utilise typiquement une méthode de simulation rapide d'un réseau UMTS. Cette méthode permet d'obtenir en un temps très court une évaluation des paramètres du réseau (puissances, nombre de channel elements utilisés, etc.) à *un instant donné,* et ceci pour des réalisations de variables aléatoires différentes (situations du réseau, nombre et positions des mobiles, etc.). Ces modélisations peuvent être effectuées sur des durées, et la série temporelle des paramètres est donnée en sortie.

En utilisant les résultats des simulations, la méthode exposée ici évalue les indicateurs de qualité, en tout point du réseau, soit :

- la probabilité instantanée de « non couverture » ;
- la probabilité d'accès ;
- la probabilité de maintien pour une durée donnée ;
- la probabilité de « bonne communication » instantanée, soit la probabilité pour un mobile d'avoir une « bonne communication » dans le réseau pendant une durée donnée.

[1] J. Maucher et al., « UMTS EASYCOPE : A tool for UMTS network and algorithm evaluation », IEEE Conf. Broadband Communications, pp. 50-1 - 50-6, February 2002.

[2] B. Schröder et al., "An analytical approach for determining coverage probabilities in large UMTS networks", IEEE Conf., pp. 1750-1754, 2001.

[3] A. G. Volko, et al., "Voice QoS in third-generation mobile systems ", IEEE on selected Areas in Communications, Vol. 17, No. 1, Janvier 1999.

[4] Si Wu, K.Y. Michael Wong, and Bo Li, "A Dynamic Call Admission Policy With Precision QoS Guarantee Using Stochastic Control for Mobile Wireless Networks", IEEE Transactions on networking, Vol. 10, No. 2, pp. 257-272, April 2002.

[5] K.S. Gilhousen, et al. "On the capacity of a cellular CDMA system," IEEE Trans. Veh. Technol., Vol.40, pp. 303-311, May 1991.

[6] J. Laiho et al., Radio Network Planning and Optimisation for UMTS, John Wiley & Sons : Chichester, 2002.

**Revendications**

1. Procédé d'évaluation de la qualité de service d'un réseau de télécommunications, notamment de téléphonie mobile, comprenant une première étape consistant à mesurer ou simuler une série de grandeurs élémentaires représentatives du fonctionnement du réseau et influant sur la qualité de service, et une deuxième étape consistant à réaliser une analyse de ces grandeurs afin de délivrer une évaluation de la qualité de service dans le réseau, **caractérisé en ce que** la deuxième étape inclut les sous-étapes suivantes :

   a) fournir un critère représentatif de la perception d'une certaine qualité de service par un utilisateur, sous la forme d'une expression composite incorporant un sous-groupe ($\Gamma$) des grandeurs élémentaires, et incorporant également au moins un paramètre aléatoire ($\xi_b, \xi_m$), représentatif d'un phénomène de shadowing dans le réseau,
   b) introduire les grandeurs élémentaires mesurées ou simulées appartenant au sous-groupe ($\Gamma$) dans cette expression composite ;
   c) fournir au moins une répartition statistique d'au moins un paramètre aléatoire, l'introduire dans l'expression composite et en déduire une répartition statistique du critère représentatif de la qualité de service.

2. Procédé selon la revendication 1, **caractérisé en que** la répartition statistique du critère de qualité de service est utilisée dans une étape d) pour établir une probabilité de respect d'une qualité de service donnée.

3. Procédé selon la revendication 1, **caractérisé en ce que** la répartition statistique fournie pour ledit au moins un paramètre de shadowing ($\xi_m$), est une répartition gaussienne, dont on fournit le centre et l'écart type.

4. Procédé selon l'une quelconque des revendications précédentes, **caractérisé en ce que** le critère composite incorpore deux paramètres aléatoires de shadowing ($\xi_b$, $\xi_m$), l'un représentant le shadowing au niveau d'un terminal mobile considéré, l'autre représentant le shadowing au niveau d'une station de transmission considérée.

5. Procédé selon la revendication 4, **caractérisé en ce que** l'étape c) est réalisée à partir de répartitions statistiques respectives des deux paramètres aléatoires de shadowing ($\xi_b$, $\xi_m$), une première de ces répartitions statistiques ayant la forme d'une série de tirages aléatoires effectifs, l'autre de ces répartitions statistiques ayant la forme d'une loi de répartition.

6. Procédé selon la revendication 2, **caractérisé en ce que** ledit respect d'une certaine qualité de service est exprimé sous la forme d'une inégalité dont le respect dépend du critère composite.

7. Procédé selon la revendication précédente, **caractérisé en ce que** ledit respect d'une qualité de service donnée inclut plusieurs inégalités nécessaires $(f_b^{(1)}, ..., f_b^{(6)})$ et **en ce que** l'étape d) inclut le fait d'établir une probabilité que l'ensemble de ces inégalités soit vérifié, en calculant un extremum sur un même membre de ces différentes inégalités.

8. Procédé selon la revendication 6 ou la revendication 7, **caractérisé en ce que** ledit respect d'une qualité de service donnée inclut plusieurs inégalités correspondant chacune à une condition de mise en liaison d'un terminal avec une station différente du réseau, et l'étape d) inclut le fait d'établir une probabilité qu'au moins une de ces inégalités soit vérifiée.

9. Procédé selon l'une quelconque des revendications précédentes, **caractérisé en ce que** l'étape d) consiste à établir une probabilité de maintien d'une qualité donnée sur une durée prédéfinie, et **en ce que** cette probabilité de maintien est calculée sous la forme d'une probabilité de respect du critère composite sur un nombre de tirages du paramètre aléatoire, nombre de tirages choisi représentatif de la durée prédéfinie.

10. Procédé selon la revendication 9, **caractérisé en ce que** la probabilité de respect du critère composite sur la durée prédéfinie est calculée en tenant compte en outre d'une suite temporelle de données en présence sur les liaisons du réseau, chaque tirage du paramètre aléatoire étant associé à un instant de la suite temporelle pour la prise en compte des données en présence à chaque instant dans le réseau.

11. Procédé selon l'une quelconque des revendications précédentes, **caractérisé en ce qu'**il comprend la mise en oeuvre des étapes a) à c) pour une série d'emplacements de terminal mobile dans le réseau, et l'étape ultérieure consistant à dresser une représentation géographique de la qualité de communication dans le réseau.

**Claims**

1. Method of evaluating the quality of service of a telecommunication network, in particular a mobile telephone network, comprising a first step consisting in measuring or simulating a series of individual quantities representative of the operation of the network and affecting the quality of service, and a second step consisting in performing an analysis of these quantities in order to deliver an evaluation of the quality of service in the network, **characterized in that** the second step includes the following substeps:

   a) supplying a criterion representative of the perception of a certain quality of service by a user, in the form of a composite expression incorporating a subgroup ($\Gamma$) of the individual quantities, and also incorporating at least one random parameter ($\xi_b$, $\xi_m$) representative of a shadowing phenomenon in the network,
   b) introducing the measured or simulated individual quantities belonging to the subgroup ($\Gamma$) into this composite expression;
   c) supplying at least one statistical distribution of at least one random parameter, introducing it into the composite expression and deducing from it a statistical distribution of the criterion representative of the quality of service.

2. Method according to Claim 1, **characterized in that** the statistical distribution of the quality of service criterion is used in a step d) to establish a probability of compliance with a given quality of service.

3. Method according to Claim 1, **characterized in that** the statistical distribution supplied for said at least one shadowing parameter ($\xi_m$) is a Gaussian distribution, the centre and standard deviation of which are supplied.

4. Method according to any one of the preceding claims, **characterized in that** the composite criterion incorporates two random shadowing parameters ($\xi_b$, $\xi_m$), one representing the shadowing on a mobile terminal concerned, the other representing the shadowing on a transmission station concerned.

5. Method according to Claim 4, **characterized in that** the step c) is performed based on respective statistical distributions of the two random shadowing parameters ($\xi_b$, $\xi_m$), a first of these statistical distributions having the form of a series of actual random lots, the other of these statistical distributions having the form of a distribution law.

6. Method according to Claim 2, **characterized in that** said compliance with a certain quality of service is expressed in the form of an inequality, the compliance with which depends on the composite criterion.

7. Method according to the preceding claim, **characterized in that** said compliance with a given quality of service includes several necessary inequalities ($f_b^{(1)}$, ..., $f_b^{(6)}$) and **in that** the step

   d) includes the fact of establishing a probability that the set of these inequalities is verified, by calculating an extremum over one and the same member of these different inequalities.

8. Method according to Claim 6 or Claim 7, **characterized in that** said compliance with a given quality of service includes several inequalities, each corresponding to a condition for linking a terminal with a different station of the network, and the step d) includes the fact of establishing a probability that at least one of these inequalities is verified.

9. Method according to any one of the preceding claims, **characterized in that** the step d) consists in establishing a probability of maintaining a given quality over a predetermined duration, and **in that** this maintenance probability is calculated in the form of a probability of compliance with the composite criterion over a number of lots of the random parameter, number of lots chosen to be representative of the predetermined duration.

10. Method according to Claim 9, **characterized in that** the probability of compliance with the composite criterion over the predetermined duration is calculated by also taking into account a time-related series of data present on the links of the network, each lot of the random parameter being associated with an instant of the time-related series for taking into account presence data at each instant in the network.

11. Method according to any one of the preceding claims, **characterized in that** it comprises the implementation of the steps a) to c) for a series of mobile terminal positions in the network, and the subsequent step consisting in preparing a geographic representation of the communication quality in the network.

**Patentansprüche**

1. Verfahren zur Schätzung der Dienstqualität eines Telekommunikationsnetzes, insbesondere eines Mobiltelefonienetzes, das einen ersten Schritt, der darin besteht, eine Reihe von Elementargrößen zu messen oder zu simulieren, die für den Betrieb des Netzes repräsentativ sind und die Dienstqualität beeinflussen, und einen zweiten Schritt aufweist, der darin besteht, eine Analyse dieser Größen durchzuführen, um eine Schätzung der Dienstqualität im Netz zu liefern, **dadurch gekennzeichnet, dass** der zweite Schritt die folgenden Unterschritte umfasst:

    a) Liefern eines Kriteriums, das für die Wahrnehmung einer gewissen Dienstqualität durch einen Benutzer repräsentativ ist, in Form eines zusammengesetzten Ausdrucks, der eine Untergruppe ($\Gamma$) der Elementargrößen umfasst, und ebenfalls mindestens einen Zufallsparameter ($\xi_b$, $\xi_m$) umfasst, der für ein Shadowing-Phänomen im Netz repräsentativ ist,
    b) Einführen der gemessenen oder simulierten Elementargrößen, die zur Untergruppe ($\Gamma$) gehören, in diesen zusammengesetzten Ausdruck;
    c) Liefern mindestens einer statistischen Verteilung mindestens eines Zufallsparameters, deren Einführung in den zusammengesetzten Ausdruck, und Ableiten davon einer statistischen Verteilung des für die Dienstqualität repräsentativen Kriteriums.

2. Verfahren nach Anspruch 1, **dadurch gekennzeichnet, dass** die statistische Verteilung des Dienstqualitätskriteriums in einem Schritt d) verwendet wird, um eine Wahrscheinlichkeit der Beachtung einer gegebenen Dienstqualität zu erstellen.

3. Verfahren nach Anspruch 1, **dadurch gekennzeichnet, dass** die für den mindestens einen Shadowing-Parameter ($\xi_m$) gelieferte statistische Verteilung eine Gaußsche Verteilung ist, deren Zentrum und die typische Abweichung geliefert werden.

4. Verfahren nach einem der vorhergehenden Ansprüche, **dadurch gekennzeichnet, dass** das zusammengesetzte Kriterium zwei Shadowing-Zufallsparameter ($\xi_b$, $\xi_m$) enthält, von denen der eine das Shadowing in Höhe eines betrachteten mobilen Endgeräts und der andere das Shadowing in Höhe einer betrachteten Übertragungsstation darstellt.

5. Verfahren nach Anspruch 4, **dadurch gekennzeichnet, dass** der Schritt c) ausgehend von jeweiligen statistischen Verteilungen der zwei Shadowing-Zufallsparameter ($\xi_b$, $\xi_m$) durchgeführt wird, wobei eine erste dieser statistischen Verteilungen die Form einer Reihe von effektiven Zufallsziehungen hat, während die andere dieser statistischen Verteilungen die Form eines Verteilungsgesetzes hat.

6. Verfahren nach Anspruch 2, **dadurch gekennzeichnet, dass** die Beachtung einer gewissen Dienstqualität in Form einer Ungleichheit ausgedrückt wird, deren Beachtung vom zusammengesetzten Kriterium abhängt.

7. Verfahren nach dem vorhergehenden Anspruch, **dadurch gekennzeichnet, dass** die Beachtung einer gegebenen Dienstqualität, mehrere notwendige Ungleichheiten ($f_b^{(1)}$, ... , $f_b^{(6)}$) umfasst, und dass der Schritt d) die Tatsache umfasst, eine Wahrscheinlichkeit festzustellen, dass die Gesamtheit dieser Ungleichheiten geprüft wird, indem ein Extremum an einem gleichen Glied dieser verschiedenen Ungleichheiten berechnet wird.

8. Verfahren nach Anspruch 6 oder Anspruch 7, **dadurch gekennzeichnet, dass** die Beachtung einer gegebenen Dienstqualität mehrere Ungleichheiten umfasst, die je einer Verbindungsherstellungsbedingung eines Endgeräts mit einer anderen Station des Netzes entsprechen, und der Schritt d) die Feststellung einer Wahrscheinlichkeit umfasst, dass mindestens eine dieser Ungleichheiten geprüft wird.

9. Verfahren nach einem der vorhergehenden Ansprüche, **dadurch gekennzeichnet, dass** der Schritt d) darin besteht, eine Wahrscheinlichkeit der Aufrechterhaltung einer gegebenen Qualität während einer vordefinierten Dauer festzustellen, und dass diese Wahrscheinlichkeit der Aufrechterhaltung in Form einer Wahrscheinlichkeit der Beachtung des zusammengesetzten Kriteriums über eine Anzahl von Ziehungen des Zufallsparameters berechnet wird, wobei die Anzahl von Ziehungen als für die vordefinierte Dauer repräsentativ gewählt wird.

10. Verfahren nach Anspruch 9, **dadurch gekennzeichnet, dass** die Wahrscheinlichkeit der Beachtung des zusammengesetzten Kriteriums über die vordefinierte Dauer mit zusätzlicher Berücksichtigung einer zeitlichen Folge von Daten berechnet wird, die auf den Verbindungen des Netzes vorhanden sind, wobei jede Ziehung des Zufallsparameters einem Augenblick der zeitlichen Folge für die Berücksichtigung der in jedem Zeitpunkt im Netz vorhandenen Daten zugeordnet ist.

11. Verfahren nach einem der vorhergehenden Ansprüche, **dadurch gekennzeichnet, dass** es die Anwendung der Schritte a) bis c) auf eine Reihe von mobilen Endgerätstandorten im Netz enthält, und der spätere Schritt darin besteht, eine geographische Darstellung der Kommunikationsqualität im Netz anzufertigen.

$$\underline{\text{FIG.1}}$$

$$\underline{\text{FIG.2}}$$

$B = \{b_1, b_2, \ldots b_N\}$
$M = \{m_1, m_2, \ldots m_M\}$
$L = \{l_1, l_2, \ldots l_L\}$

FIG.3